# EUROPÄISCHE PATENTSCHRIFT

(11) **EP 0 924 445 B1**
(45) Veröffentlichungstag und Bekanntmachung des Hinweises auf die Patenterteilung: **26.02.2003**
(21) Anmeldenummer: 98121790.4
(22) Anmeldetag: 16.11.1998
(51) Int. Cl.: F16F 1/12

(54) **Federunterlage**
Spring support
Support de ressort

(30) Priorität: 19.12.1997 DE 29722552 U
(43) Veröffentlichungstag der Anmeldung: 23.06.1999
(73) Patentinhaber: Trelleborg Automotive Technical Centre GmbH, 56203 Höhr-Grenzhausen (DE)
(72) Erfinder: Arndt, Detlef, Dipl.-Ing. c/o Trelleborg GmbH/PCC, 24539 Neumünster (DE); Grundt, Jürgen, Dipl.-Ing. c/o Trelleborg GmbH/PCC, 24539 Neumünster (DE)
(74) Vertreter: Preissner, Nicolaus, Dipl.-Ing.

(56) Entgegenhaltungen:
- DE-A- 2 005 701
- DE-C- 814 363
- FR-A- 2 089 650
- GB-A- 2 241 765
- US-A- 3 051 469
- US-A- 3 489 402

## Beschreibung

Die vorliegende Erfindung betrifft eine Federunterlage, insbesondere eine Federunterlage für das Federlager der Hinterachse eines Personenkraftwagens. Die Federunterlage weist einen scheibenförmigen Körper aus elastomerem Material und eine in diesen elastomeren Körper eingebettete Verstärkungseinlage auf.

Federunterlagen dieser Art sind bekannt und dienen der oberen und unteren Abstützung einer Torsionsfeder, die Teil der Hinterachs-Radaufhängung eines Personenkraftwagens ist. Die Torsionsfeder stützt sich üblicherweise oben im Radkasten gegen die Karosserie ab, und unten gegen einen am Außenrohr des Feder- oder Dämpferbeines angebrachten Blechteller, wobei dann jeweils die Federunterlage als geräuschdämpfendes Element zwischengelegt wird.

Die in den elastomeren Körper eingebettete Verstärkungseinlage ist bei bekannten Federunterlagen üblicherweise eine Metallplatte, die völlig von dem elastomeren Material umhüllt ist. Die Nachteile einer solchen bekannten Federunterlage liegen - je nach Art des verwendeten Metalls - in dem relativ hohen Gewicht und in dem verhältnismäßig aufwendigen Fertigungsprozeß, der die Federunterlage unangemessen verteuert. Für einen solchen Fertigungsprozeß muß das Metallteil nämlich vorphosphatiert und mit Haftvermittlern versehen werden, damit ein einwandfreier chemischer und auch physikalischer Verbund mit dem elastomeren Material gewährleistet ist. Um das Gewicht der Federunterlage wenigstens einigermaßen niedrig zu halten, wird teilweise Aluminium für die Verstärkungseinlage verwendet, das allerdings eine niedrigere Steifigkeit als beispielsweise Stahl aufweist.

Aufgabe der vorliegenden Erfindung ist es, eine Reduzierung des Gewichts bei gleichzeitiger Erhöhung der Steifigkeit der Federunterlage zu erreichen.

Diese Aufgabe wird bei einer Federunterlage der eingangs genannten Art erfindungsgemäß dadurch gelöst, daß die Verstärkungseinlage aus Kunststoff besteht.

Der Austausch der metallenen Verstärkungseinlage durch eine Kunststoff-Verstärkungseinlage ist das Resultat einer längeren Forschungs- und Entwicklungstätigkeit, mit der im wesentlichen ein geeignetes Kunststoffgranulat sowie eine ausreichende Verbindung zwischen dem elastomeren Material und dem Kunststoff gefunden werden mußte. Die erfindungsgemäße Federunterlage wird dadurch hergestellt, daß über die aus einem speziellen Kunststoffgranulat hergestellte Verstärkungseinlage durch ein Werkzeug eine speziell zusammengestellte Elastomermischung gespritzt und anschließend unter Zufuhr von Wärme und Druck vulkanisiert wird. Bei einem gewissen Anteil von synthetischem Kautschuk (SBR=Styrol-Butadien-Rubber) in dem elastomeren Material entsteht bei diesem Vorgang eine mechanische Verbindung zwischen dem Elastomer und dem Kunststoff, die als Interdiffusion von Styrolköpfen bezeichnet wird. Bei dieser Interdiffusion dringen die Styrolköpfe des synthetischen Kautschuks in die Oberfläche des Kunststoffs ein, wodurch nach einer gewissen Abkühlzeit eine fest haftende Verbindung entsteht.

Die Vorteile der erfindungsgemäßen Federunterlage liegen insbesondere darin, daß sie ein geringeres Gewicht als die bekannten Federunterlagen aufweist und daß die Verstärkungseinlage ohne irgendwelche Vorbehandlungen in das elastomere Material eingebettet werden kann. Somit ergibt sich ein verhältnismäßig einfacher Herstellungsprozeß, der eine Senkung der Herstellungskosten mit sich bringt. Darüber hinaus sorgt die Federunterlage aufgrund der Kunststoffeinlage für eine bessere akustische Entkoppelung der Fahrgeräusche von der Karosserie und führt aufgrund ihrer hohen Steifigkeit zu einer Erhöhung der statischen und dynamischen Tragkräfte.

Vorteilhafte Weiterbildungen der Erfindung sind in den Unteransprüchen angegeben, wonach die Verstärkungseinlage entweder eine Scheibe oder ein Vieleck und konvex oder konkav ausgebildet sein kann.

Im folgenden wird ein bevorzugtes Ausführungsbeispiel der Erfindung anhand einer Zeichnung näher erläutert.

Es zeigen:
- Fig. 1: eine Unteransicht einer erfindungsgemäßen Federunterlage; und
- Fig. 2: einen Querschnitt längs der Linie A-A der Fig. 1.

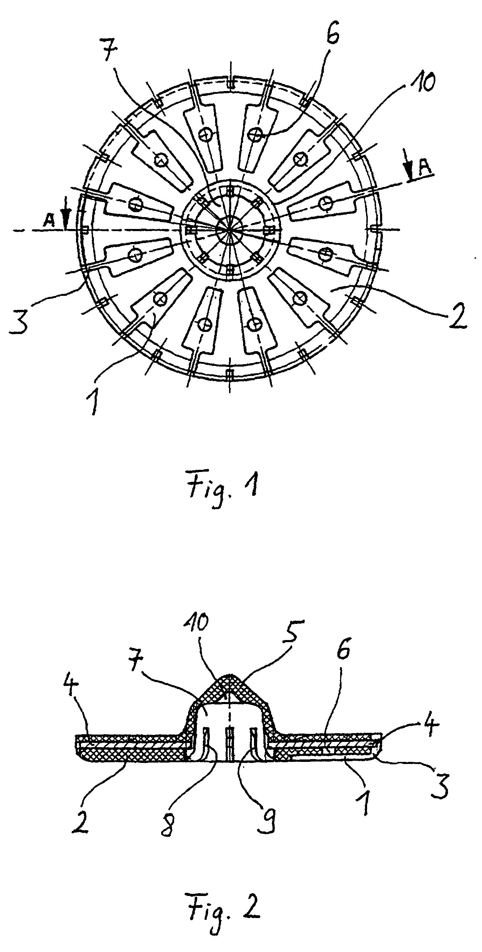

Fig. 1 zeigt eine Unteransicht einer Federunterlage, wie sie in einer Anzahl von vier Stück pro Fahrzeug für die Federlager der Hinterachse eines Personenkraftwagens vorgesehen ist. Die Federunterlage besteht im wesentlichen aus einem scheibenförmigen, kreisrunden elastomeren Körper 2, in den eine Verstärkungseinlage 4 in Form einer Kunststoffscheibe eingebettet ist (vergleiche Fig. 2). Die Unterseite der Federunterlage weist zur Reduzierung ihres Gewichts zwölf Ausnehmungen 1 sowie eine gleiche Anzahl von Wasserablaufrillen 3 auf. Im Zentrum des elastomeren Körpers 2 ist eine zur Oberseite der Federunterlage weisende Führungsnase 5 ausgebildet, die einen von der Unterseite zugänglichen Aufnahmeraum 10 für einen Metallkonus bildet. Bohrungen 6 in den Ausnehmungen 1 erstrecken sich durch die untere Hälfte des elastomeren Körpers 2 und haben einen fertigungstechnischen Grund.

Fig. 2 zeigt einen Querschnitt entlang der Linie A-A der Fig. 1. Anhand dieser Darstellung wird die Lage der Kunststoff-Verstärkungseinlage 4 und der Führungsnase 5 deutlich. Die Verstärkungseinlage 4 ist außen vollständig vom elastomeren Material umhüllt. Die Führungsnase 5 dient bei der Montage des Feder- oder Dämpferbeins der Positionierung der Torsionsfeder (hier nicht dargestellt), indem die Führungsnase 5 axial in die Torsionsfeder eingreift. In dem von der Führungsnase 5 gebildeten Aufnahmeraum 10 ist zur Verstärkung ein Metallkonus 7 angeordnet, der wiederum durch Streben 8, 9 verstärkt ist. Bei der Herstellung der Federunterlage wird um die Verstärkungseinlage 4, die aus einem speziellen Kunststoffgranulat hergestellt ist, mittels eines Werkzeugs eine speziell zusammengestellte Gummimischung gespritzt und dann unter Zufuhr von Wärme und Druck vulkanisiert.

## Patentansprüche

1. Federunterlage, insbesondere für das Federlager der Hinterachse eines Personenkraftwagens, mit einem scheibenförmigen Körper (2) aus elastomerem Material und mit einer in den elastomeren Körper (2) eingebetteten Verstärkungseinlage (4),
**dadurch gekennzeichnet, daß**
die Verstärkungseinlage (4) aus Kunststoff besteht.

2. Federunterlage nach Anspruch 1,
**dadurch gekennzeichnet, daß**
die Verstärkungseinlage (4) eine Scheibe ist.

3. Federunterlage nach Anspruch 1,
**dadurch gekennzeichnet, daß**
die Verstärkungseinlage (4) die Form eines Vielecks aufweist.

4. Federunterlage nach Anspruch 2 oder 3,
**dadurch gekennzeichnet, daß**
die Verstärkungseinlage (4) konvex ausgebildet ist.

5. Federunterlage nach Anspruch 2 oder 3,
**dadurch gekennzeichnet, daß**
die Verstärkungseinlage (4) konkav ausgebildet ist.

## Claims

1. A spring pad, more particularly for the rear axle suspension of an automobile, including a disk-shaped body (2) of an elastomeric material and a reinforcement inlay (4) embedded in said elastomeric body (2), **characterized in that** said reinforcement inlay (4) is made of plastics.

2. The spring pad as set forth in claim 1, **characterized in that** said reinforcement inlay (4) is a circular disk.

3. The spring pad as set forth in claim 1, **characterized in that** said reinforcement inlay (4) is polygonal in shape.

4. The spring pad as set forth in claim 2 or 3, **characterized in that** said reinforcement inlay (4) is configured convex.

5. The spring pad as set forth in claim 2 or 3, **characterized in that** said reinforcement inlay (4) is configured concave.

## Revendications

1. Support de ressort, en particulier palier de ressort de l'essieu arrière d'une voiture particulière, comportant un corps en forme de disque (2) en matériau élastomère et un insert de renforcement (4) noyé dans le corps élastomère (2), **caractérisé en ce que** l'insert de renforcement (4) est constitué en matière plastique.

2. Support de ressort selon la revendication 1, **caractérisé en ce que** l'insert de renforcement (4) est un disque.

3. Support de ressort selon la revendication 1, **caractérisé en ce que** l'insert de renforcement (4) présente la forme d'un polygone.

4. Support de ressort selon l'une ou l'autre des revendications 2 et 3, **caractérisé en ce que** l'insert de renforcement (4) est réalisé convexe.

5. Support de ressort selon l'une ou l'autre des revendications 2 et 3, **caractérisé en ce que** l'insert de renforcement (4) est réalisé concave.
